# EUROPEAN PATENT APPLICATION

(11) **EP 4 847 427 A1**
(43) Date of publication of application: **02.12.2026**
(21) Application number: 25886361.2
(22) Date of filing: 23.06.2025
(51) Int. Cl.: B65H 23/032, H01M 10/04

(54) **METHOD FOR ALIGNING INDEPENDENTLY STRUCTURED ROLL-TO-ROLL MACHINES**

(30) Priority: 31.10.2024 KR 20240152607
(71) Applicant: LG Energy Solution, Ltd., Seoul 07335 (KR)
(72) Inventor: KIM, Bo Sun, Daejeon 34122 (KR); KWAK, Jun Hyun, Daejeon 34122 (KR)
(74) Representative: Goddar, Heinz J.
(86) International application number: PCT/KR2025/008734
(87) International publication number: WO 2026/095251

(57) **Abstract**

An alignment method between independent roll-to-roll machines provides an electrode alignment method in which based on a correction amount data obtained by correcting a width direction position of an electrode traveling in a first machine of a roll-to-roll process, a second machine, which is independent by differing from the first machine in at least one of a function and an install position, is moved in a width direction to align the electrode in the width direction.

## Description

### Technical Field

The present disclosure relates to an alignment method between roll-to-roll machines, and more specifically, relates to relative correction amount feedback control for Y-axis (width direction) position alignment between independently structural roll-to-roll machines.

### Background

Roll-to-roll machines are widely known to achieve the best processability when operating positions for performing operations, for example, joining, cutting, lamination, sealing, and the like, in processes and a travel position of an unwinder are on the same line. However, in a lamination machine that positive electrodes and negative electrodes are joined, the operation in which the travel positions between the positive electrodes and the negative electrodes are aligned on the same line is difficult due to a hardly measurable machine structure, as well as the travel path alignment between independent machines (e.g., an unwinder machine and a lamination machine) is difficult.

The first reason is because travel path alignment between independent machines is difficult. Plumbness/levelness of bases in the respective independent machines must be verified, and it is necessary to consider a meandering level of the direction perpendicular to the travel path between the respective independent machines. However, due to the structure of the lamination machine, it is extremely difficult to measure the plumbness/levelness of the bases and the meandering level of the direction perpendicular to the travel path.

The second reason is because due to the machine structure making it difficult to measure positions, it is difficult to align travel positions between supply parts (positive electrode 1, positive electrode 2, negative electrode 1, negative electrode 2). Furthermore, the unwinder machine has four electrode edge sensors (Spool EPCs) that determine the travel position, where it is not an easy task to align all four sensors by positioning them on the same line. The base for aligning an absolute position between the electrode edge sensors does not exist in the horizontal direction, and mechanical sections themselves, to which the electrode edge sensors are constrained, have facility tolerances, whereby even if it is possible to measure the level from the base, it is a structure with inevitable differences.

Accordingly, install parameters (IP: e.g., base plumbness/levelness, etc.) between independent machines and a function for organically aligning four electrode supply parts are desired.

### Disclosure

### Technical Problem

Therefore, it is an object of the present disclosure to provide an alignment method between independent machines.

### Technical Solution

To achieve the above-described object, the present disclosure provides an electrode alignment method that may include correcting a width direction position of an electrode traveling in a first machine of a roll-to-roll process to obtain a correction amount data, moving a second machine, which is independent by differing from the first machine in at least one of: a function and an install position, based on the obtained correction amount data, in a width direction to align the electrode in the width direction.

In the present disclosure, the first machine may be an electrode lamination machine and the second machine may be an electrode unwinder machine; or the first machine may be a first electrode unwinder machine and the second machine may be a second electrode unwinder machine with a different install position from the first electrode unwinder machine.

In the present disclosure, the electrode lamination machine may include a positive electrode edge position controller (EPC) provided with an actuator and a negative electrode edge position controller provided with an actuator.

In the present disclosure, the width direction position of the electrode may be corrected by the actuator, and the correction amount data may be a correction amount data of the actuator.

In the present disclosure, the electrode unwinder machine may include one or more of a traveling positive electrode unwinder, a standby positive electrode unwinder, a traveling negative electrode unwinder, and a standby negative electrode unwinder; and the first electrode unwinder machine and the second electrode unwinder machine may each differently be one or more of the traveling positive electrode unwinder, the standby positive electrode unwinder, the traveling negative electrode unwinder, and the standby negative electrode unwinder.

In the present disclosure, the second machine, including the electrode, may move in its entirety.

The method according to the present disclosure may includes: monitoring the correction amount data; and sampling the correction amount data.

The method according to the present disclosure may include: filtering the sampled correction amount data; and calculating a correction amount average from the filtered correction amount data.

The method according to the present disclosure may include: determining whether a correction is to be performed based on the calculated correction amount average; and moving the second machine in the width direction to perform the correction based on determining that the correction is to be performed.

In the present disclosure, the correction of the second machine may be performed based on the correction amount average exceeding a preset minimum correction amount.

In the present disclosure, based on the correction amount average exceeding a preset maximum correction amount, the correction of the second machine may be performed to the maximum correction amount.

In the present disclosure, based on the correction amount average being between preset minimum and maximum correction amounts, the correction of the second machine may be performed to the correction amount average.

In the present disclosure, based on determining that the correction is to be performed, at least one of an electrode replacement time point, and electrode travel acceleration and deceleration sections may be considered.

A preferred electrode alignment method according to the present disclosure may include: monitoring a correction amount data obtained by correcting a width direction position of an electrode traveling in a first machine of a roll-to-roll process; sampling the correction amount data; filtering the sampled correction amount data; calculating a correction amount average from the filtered correction amount data; determining whether a correction is to be performed based on the calculated correction amount average; and moving a second machine, which is independent by differing from the first machine in at least one of a function and an install position, in a width direction to perform the correction, based on determining that the correction is to be performed.

The present disclosure also provides an electrode alignment system including: a first machine for correcting a width direction position of an electrode traveling in a roll-to-roll process; a second machine that is independent by differing from the first machine in at least one of a function and an install position, and is movable in a width direction; and a control part for controlling the electrode to be aligned in the width direction by moving the second machine in the width direction based on a correction amount data of the first machine. Any combination between all claims, any combination between all elements, any combination between all steps or processes, and any combination between all embodiments are possible.

### Advantageous Effects

According to the present disclosure, it is possible to organically align install parameters between independent machines (e.g., an unwinder machine and a lamination machine) and four electrode supply parts.

### Brief Description of the Drawings

Figure 1 is a schematic diagram that shows travel paths between independent machines before correction.
Figure 2 is a schematic diagram that shows alignment of travel paths between independent machines after correction according to aspects of the present disclosure.
Figure 3 is a schematic diagram that shows travel paths between supply parts before correction.
Figure 4 is a schematic diagram that shows alignment of travel paths between supply parts after correction according to aspects of the present disclosure.
Figure 5 is a schematic diagram that shows a time point when a traveling electrode is exhausted.
Figure 6 is a schematic diagram that shows a standby electrode at a stop position of a traveling electrode.
Figure 7 is a schematic diagram that shows a standby electrode returned at its original point after machine restart.
Figure 8 is a schematic diagram that shows an edge position controller (EPC) of a lamination machine in accordance with a path line of a standby electrode.
Figure 9 is a flow diagram of a control operation sequence according to aspects of the present disclosure.
Figure 10 is a graph that illustrates a control operation sequence according to aspects of the present disclosure.

### Detailed Description

Hereinafter, the present disclosure will be described in detail with reference to the accompanying drawings.

The present disclosure relates to an electrode alignment method, where the electrode alignment method according to aspects of the present disclosure is characterized in that based on correction amount data obtained by correcting a width direction position of an electrode traveling in a first machine of a roll-to-roll process, a second machine, which is independent by differing from the first machine in at least one of its function and install position, is moved in the width direction to align the electrode in the width direction.

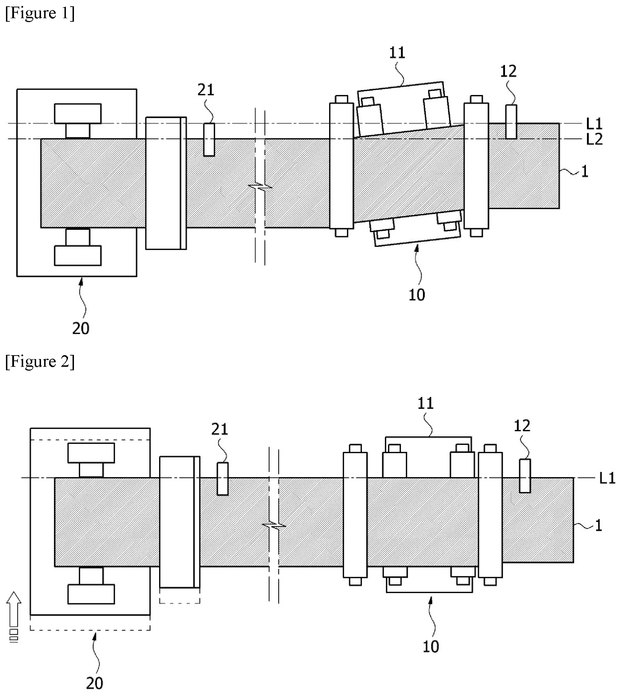

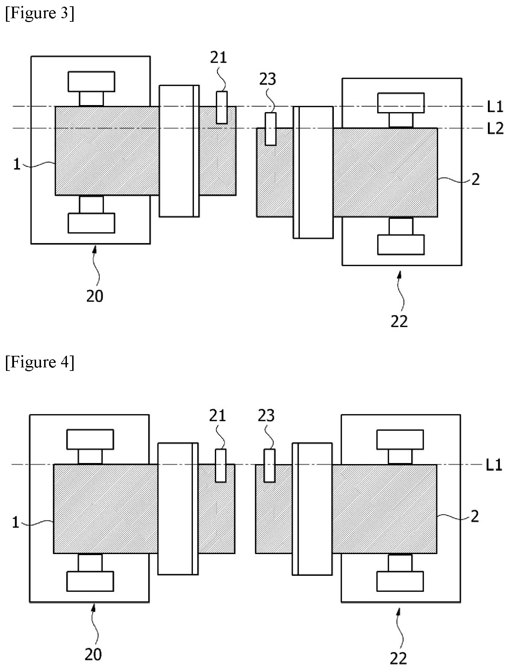

In the present disclosure, the matter that the plurality of machines is independent may mean that the respective machines have different functions and/or that install positions of the respective machines are spatially separated. Therefore, relationships of a traveling electrode unwinder and a standby electrode unwinder (see Figures 3 and 4), which have the same function but different install positions, as well as a lamination machine and an unwinder machine (see Figures 1 and 2), which have different functions and install positions can also be regarded as independent machines.

Figures 1 and 2 (plan views) is a schematic diagram illustrating a method of electrode alignment according to a first aspect of the present disclosure. Based on correction amount data obtained by correcting a width direction position of an electrode (1) traveling in a first machine (10) of a roll-to-roll process, a second machine (20), which is different both in its function and install position and thus independent from the first machine (10), may be moved in the width direction to align the electrode (1) in the width direction.

In Figures 1 and 2, the width direction (Y-axis direction) may be an up-down direction, and the travel direction (X-axis direction) may be a left-right direction. Here, the width direction may be the width direction of the electrode (1), and the travel direction may be the travel direction of the electrode (1) (left → right direction in the drawings). The width direction position of the electrode (1) may indicate the width direction position of the edge (terminal, upper side edge in the drawings) of the electrode (1).

The first machine (10) may be an electrode lamination machine in which a positive electrode and a negative electrode are joined. In the drawings, only a part of the lamination machine, for example, an edge position controller (EPC), is shown, and a cutter and a laminator, and the like are omitted. The electrode lamination machine (10) may include an edge position controller (EPC) for measuring and correcting the travel path of the electrode (1), and the EPC may include a positive electrode EPC and a negative electrode EPC. The positive electrode EPC and the negative electrode EPC may each be provided with an actuator (11) and a sensor (12).

The EPC actuator (11) may be a device for correcting the position in a transfer direction (travel direction, X-axis direction) and a vertical direction (width direction, Y-axis direction), to transfer the electrode (1) along the electrode travel path in the lamination machine (10). The width direction position of the electrode (1) may be constantly corrected by the actuator (11). The correction amount of the EPC actuator (11) may indicate a movement amount that the actuator (11) really moves to send the electrode (1) along the travel path.

The sensor (12) may be a main EPC sensor. The EPC sensor may be a target sensor that determines the travel path of the electrode (1) upon traveling of the electrode (1) in the lamination machine (10). The sensor (12) may be disposed in front of the actuator (11) in the travel direction. The sensor (12) may sense the width direction position of the edge of the electrode (1). After the width direction position of the electrode (1) is sensed by the sensor (12), the width direction position of the electrode (1) may be constantly corrected by the actuator (11).

The second machine (20) is an electrode supply part unwinding the electrode (1) wound in a roll shape to supply it toward the first machine (10), which may be an electrode unwinder machine. The electrode unwinder machine may be composed of multiple unwinders for each electrode, and specifically may include one or more of a traveling positive electrode (positive electrode 1) unwinder, a standby positive electrode (positive electrode 2) unwinder, a traveling negative electrode (negative electrode 1) unwinder, and a standby negative electrode (negative electrode 2) unwinder. Only one unwinder is illustrated in the drawings. The second machine (20) may be disposed behind the first machine (10) in the travel direction. The electrode unwinder machine (20) may include a spool EPC (21), and the spool EPC (21) may be a sensor correcting a meandering of the electrode (1) upon unwinding the electrode in the supply part.

When the second machine (20) is moved in the width direction based on the correction amount data of the EPC actuator (11), the second machine (20) itself, including the electrode (1), may move in its entirety. Specifically, a shuttle itself, constituting a body of the second machine (20), may move in the width direction in its entirety, and at this time, the electrode (1) may also move together with the shuttle. The width direction movement of the second machine (20) may be performed by a conventional drive means, such as a motor or cylinder. Through the width direction movement of the second machine (20), the width direction position of the electrode (1) in the first machine (10) and the width direction position of the electrode (1) in the second machine (20) may be aligned same. Here, the same means substantially the same, but there may be a slight error (for example, 1 mm or less).

The electrode alignment system including the first machine (10) and the second machine (20) may further include a control part (not shown, control unit). The control part may control the electrode (1) to be aligned in the width direction by moving the second machine (20) in the width direction based on the correction amount data of the actuator (11). The control part may be composed of a PLC (Programmable Logic Controller), and the like, and the first machine (10) and the second machine (20) may each be provided with a PLC, and connected to enable data communication between the respective PLCs. The PLC may be provided with the software and hardware necessary for control.

In this way, the present disclosure may provide a machine logic for organically aligning the install parameters between independent machines (unwinder machine and lamination machine), and four electrode supply parts.

The present disclosure may define the following three settings, to automatically align the install parameters. First, the lamination machine and the unwinder machine are separated from each other as independent machines (different independent machines). Second, in the lamination machine, the position of the direction (Y-axis) perpendicular to the travel direction where the positive electrode EPC is installed, and the Y-axis position where the negative electrode EPC is installed exist in the same position. Third, the lamination machine and the supply part (unwinder) machine are connected to enable data communication between the PLCs.

Conventionally, the correction was performed by following the changed position of the EPC sensor position along a height of a coating part to transfer the unwinder in a direction orthogonal to the transfer direction. That is, the conventional art had a constitution of A (position of EPC sensor) + B (unwinder movement at the same distance as the sensor position).

The present disclosure recognizes an edge tip to follow an EPC PV (Present Value) variation, whereby the correction may be performed by transferring the unwinder in a direction (width direction) orthogonal to the transfer direction. Furthermore, by memorizing the optimized settings of the respective different unwinders, the install parameters (IP) of the supply parts without adjustment upon initial machine installation can be aligned and maintained continuously. That is, the present disclosure may have a constitution of A (actual EPC correction amount) + B (unwinder movement based on the current correction amount) + C (possible automatic alignment and continuous maintenance of machine install parameters).

The function effects from the perspective of install parameters are as follows.

Figures 1 and 2 (plan views) relate to alignment of travel paths between independent machines according to a first aspect, and specifically, relate to alignment of travel paths between a lamination machine and an unwinder machine, which have different functions and install positions. That is, according to aspects of Figures 1 and 2, the first machine may be an electrode lamination machine, and the second machine may be an electrode unwinder machine.

Referring to Figure 1, before correction, by constant correction by the actuator (11), the traveling electrode (1) may have a travel path of a first path line (L1) in the lamination machine (10), which is the first machine, whereas it may have a travel path of a second path line (L2) that is different in the width direction from the first path line (L1) in the unwinder machine (20), which is the second machine. Therefore, the meandering in the width direction perpendicular to the travel path occurs by the difference (L1-L2) between the first path line (L1) and the second path line (L2).

Referring to Figure 2, after correction, based on the correction amount data of the EPC actuator (11), the entire unwinder machine (20), which is the supply part, is moved in the width direction, whereby it is possible to align the traveling electrode (1) in the width direction between two machines (10, 20) while the second path line (L2) is matched with the first path line (L1). In this way, it is possible to align the travel path of the electrode (1) between independent machines (lamination machine (10) and unwinder machine (20)). Figures 1 and 2 (plan views) is a schematic diagram illustrating a method of electrode alignment according to a first aspect of the present disclosure

Figures 3 and 4 (plan views) is a schematic diagram illustrating alignment of travel paths between independent supply parts (unwinders) according to a second aspect of the present disclosure. Specifically, Figures 3 and 4 shows alignment of travel paths between a traveling electrode (positive electrode and/or negative electrode) unwinder and a standby electrode (positive electrode and/or negative electrode) unwinder, which have the same function but different install positions.

According to an aspect, the first machine may be a first electrode unwinder machine (a traveling electrode unwinder), and the second machine may be a second electrode unwinder machine (a standby electrode unwinder) having a different install position from the first electrode unwinder machine.

Meanwhile, the first electrode unwinder machine and the second electrode unwinder machine are not limited to Figures 3 and 4, and may be one or more of a traveling positive electrode unwinder, a standby positive electrode unwinder, a traveling negative electrode unwinder, and a standby negative electrode unwinder, but may be different from each other.

In Figures 3 and 4, the width direction (Y-axis direction) may be an up-down direction, and the travel direction (X-axis direction) may be a left-right direction. Here, the travel direction of the traveling electrode (1) may be a left → right direction, and the travel direction of the standby electrode (2) may be a right → left direction opposite to the traveling electrode (1). The width direction position of the electrodes (1, 2) may indicate the width direction position of the edge (terminal, upper side edge in the drawings) of the electrodes (1, 2).

Referring to Figure 3, before correction, the traveling electrode (1) may have a first path line (L1) travel path in a first unwinder (first electrode unwinder machine) (20), which is a first supply part, whereas the standby electrode (2) may have a second path line (L2) travel path that is different in the width direction from the first path line (L1) in a second unwinder (second electrode unwinder machine) (22), which is a second supply part. Therefore, the meandering in the width direction perpendicular to the travel path occurs by the difference (L1-L2) between the first path line (L1) and the second path line (L2). The first unwinder (20) and the second unwinder (22) may each include a spool EPC (21) and a spool EPC (23), respectively. The spool EPCs (21) and (23) may be a sensor correcting a meandering of the electrodes (1) and (2), respectively, upon unwinding the electrode in the supply part

Referring to Figure 4, after correction, by moving at least one of the first unwinder (20) and the second unwinder (22) in the width direction, the two electrodes (1, 2) may be aligned in the width direction while the first path line (L1) and the second path line (L2) are matched with each other. In this way, the travel position alignment between the supply parts (positive electrode 1 (traveling), positive electrode 2 (standby), negative electrode 1 (traveling), negative electrode 2 (standby)) is enabled, which has been difficult due to challenges in position measurements from the machine structures.

The travel path alignment between the supply parts according to Figures 3 and 4 (second aspect) may be linked to the travel path alignment between the independent machines according to Figures 1 and 2 (first aspect). Specifically, the travel path alignment between the supply parts may be performed before and/or after the travel path alignment between the independent machines, and/or the travel path alignment between the supply parts and the travel path alignment between the independent machines may be performed simultaneously.

For example, after aligning the travel paths between the lamination machine and the first unwinder machine (traveling electrode unwinder) according to Figures 1 and 2 (first aspect), the travel path of the second unwinder machine (standby electrode unwinder) may be aligned with the travel path of the first unwinder machine based on the travel path of the aligned first unwinder machine, according to Figures 3 and 4 (second aspect). At this time, consequently, the travel path alignment of the second unwinder machine may be based on the correction amount data of the EPC actuator of the lamination machine. In this way, the install parameters between the independent unwinder machine and lamination machine and the four electrode supply parts may be organically aligned.

The function effects from the perspective of process yield upon electrode replacement are as follows.

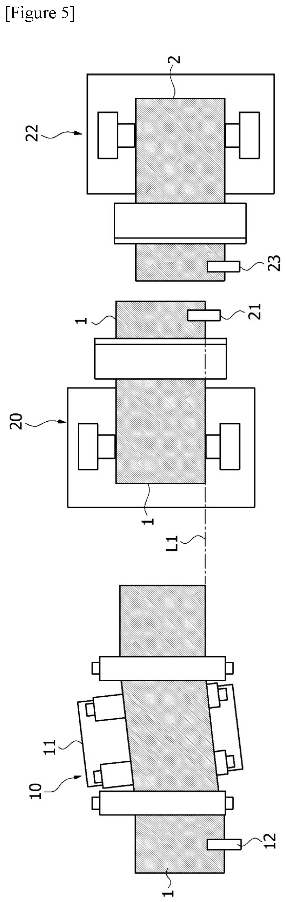

Referring to Figure 5, at the time point when the traveling electrode (1) is exhausted in the first unwinder (20), the lamination machine (10), the first unwinder (20), and the traveling electrode (1) may be stopped, where the traveling electrode (1) may have the travel path of the first path line (L1) in the lamination machine (10) and the first unwinder (20). In Figures 5 to 8 (plan views), the width direction (Y-axis direction) may be the left-right direction, and the travel direction (X-axis direction) may be the up-down direction.

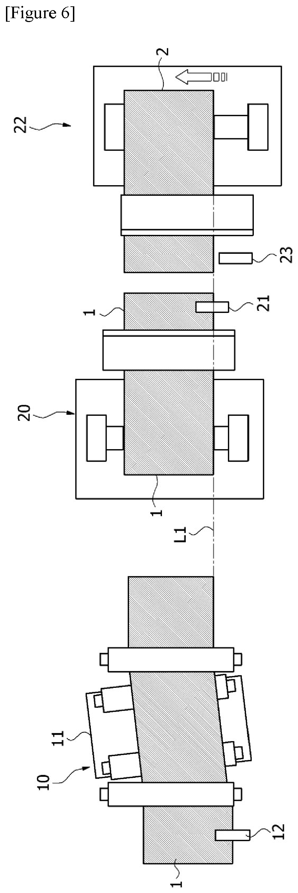

Referring to Figure 6, in the second unwinder (22), the standby electrode (2) may move in the width direction to the stop position of the traveling electrode (1), and then the material may be replaced from the traveling electrode (1) to the standby electrode (2), where the standby electrode (2) may generate a positional shift relative to the original point of the spool EPC (23) of the second unwinder (22), and at this time, the standby electrode (2) may generate a step biased toward the machine (MC) direction.

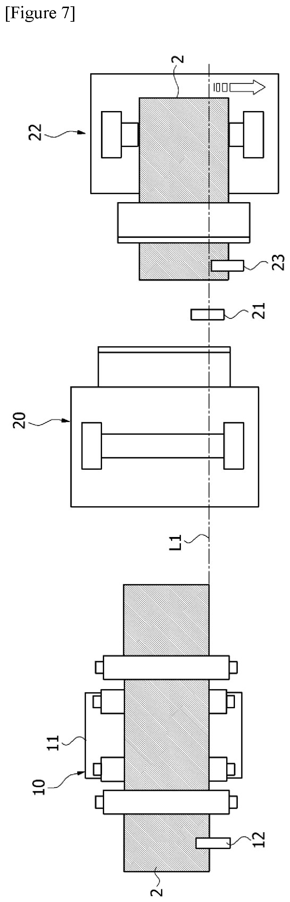

Referring to Figure 7, after the lamination machine (10) is restarted, the standby electrode (2) may return to the original point of the spool EPC (23).

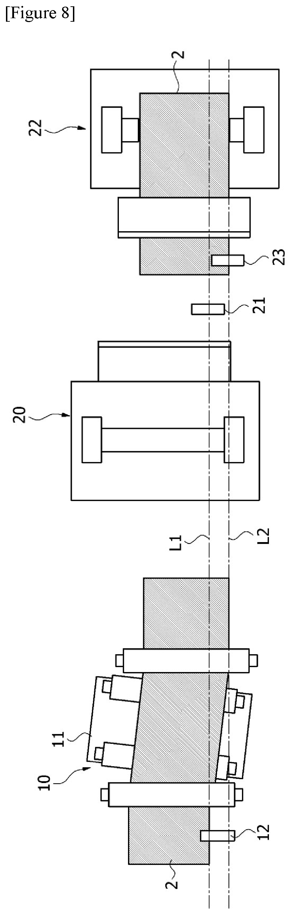

Referring to Figure 8, the main EPC of the lamination machine (10) may operate in accordance with the second path line (L2), which corresponds to the origin path line of the spool EPC (23) of the standby electrode (2), where the path line normalization may be delayed while the main EPC operates in the direction opposite to the direction for the step correction.

In this way, when 1) the joint step correction direction of the EPC of the lamination machine and 2) the correction direction due to the spool EPC origin return of the standby electrode after replacement are opposite to each other, the path line normalization may be delayed, thereby causing mass defects, but these defects may be minimized through the present disclosure (Figures 1 to 4).

The function effects from the perspective of process operation rates are as follows.

When the travel path line of the lamination and supply part machines is twisted (meandered), jamming may occur near the EPC of the lamination machine due to electrode swells. Specifically, upon connecting electrodes, a positional difference (step) may occur between the front and rear electrodes, and upon passing through the electrode connection portion, the EPC correction amount may increase rapidly due to the positional difference between the front and rear electrodes, and as the EPC correction amount increases, the electrode may be sagged due to the tension difference between the tab and bottom portions of the electrode, thereby resulting in wrinkles, and jamming may also occur due to interference when a cutter part is inserted into sections having the electrode sagging and swelling, but these may be minimized through the present disclosure (Figures 1 to 4).

In the conventional art, when a positional shift of an EPC sensor occurs, a variation is confirmed, and a supply part is moved by the confirmed variation. In the conventional art, the confirmed variation is equal to the absolute value of the sensor movement, where the correction is performed by considering only the absolute displacement, without considering the positional difference between the supply part and the EPC sensor, whereby positional differences between independent machines different from each other cannot be overcome.

According to the present disclosure, when the positional shift of the EPC sensor occurs, the correction amount change of the EPC actuator The correction amount is confirmed, and then the supply part is moved by the confirmed correction amount. In the present disclosure, the confirmed correction amount is not the same as the absolute value of the sensor movement, where the correction is performed by reflecting the relative position difference between two different machines (e.g., lamination machine and supply part machine).

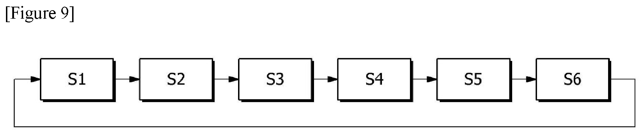

Referring to Figure 9, the electrode alignment method according to aspects of the present disclosure may include a monitoring step (S1), a sampling step (S2), a filtering step (S3), a correction amount calculation step (S4), a correction determination step (S5), and a correction step (S6). The above-described steps may be performed repeatedly as needed.

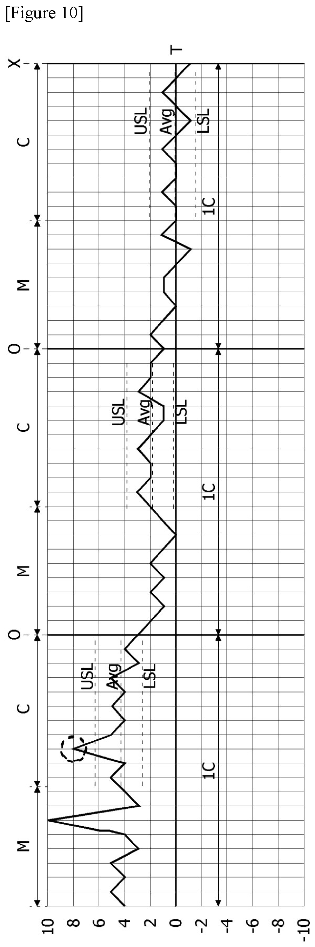

Referring to an example graph of Figure 10, M indicates a monitoring section, C indicates a sampling section, O indicates correction, X indicates non-correction, USL indicates an upper limit of filtering, Avg indicates a correction amount average, LSL indicates a lower limit of filtering, 1C indicates one cycle, and T indicates a target value. In Figure 10, the X-axis is the travel direction, the Y-axis is the width direction, and the unit of Y-axis is millimeter (mm). The electrode alignment method is described with respect to Figures 9 and 10.

In the monitoring step (S1), correction amount data is monitored. A monitoring target may be correction amount data of an EPC actuator. The correction amount data of the actuator may be correction amount data obtained by correcting a width direction position of an electrode traveling in an electrode lamination machine of a roll-to-roll process using an actuator of an edge position controller. Monitoring may be performed in the monitoring section (M) of Figure 10. The monitoring section (M) is a section where data sampling is not performed, which may be a section for checking for abnormalities after the correction value is entered and for determining the correction cycle.

In the sampling step (S2), the correction amount data is sampled. Sampling may be performed in the sampling section (C) of Figure 10. The sampling section (C) may be a section for acquiring data and performing filtering and calculations, to determine the correction value. One monitoring section (M) and one sampling section (C), which are continuous, may constitute one cycle (1C).

In the filtering step (S3), the sampled correction amount data is filtered. Upon filtering, as in Figure 10, the upper limit of filtering (USL) and the lower limit of filtering (LSL) can be appropriately set for the present value (PV) measured in the sampling section (C) of each cycle. When the upper and lower limits are set, a process of eliminating hunting values (e.g., overshoot or undershoot values), which are data that significantly differ from other regions, as indicated by a dotted circle in Figure 10, as an example, is performed.

In the correction amount calculation step (S4), the correction amount average (Avg) is calculated from the filtered correction amount data. Specifically, the average value of data within the range between the upper limit of filtering (USL) and the lower limit of filtering (LSL) may be calculated.

In the correction determination step (S5), it is determined whether to perform a correction based on the calculated correction amount average. For example, the correction of the second machine may be performed only when the correction amount average exceeds a preset minimum correction amount (path line management value), and when it is below the minimum correction amount, the correction may not be necessary. When the correction amount average exceeds a preset maximum correction amount, the correction of the second machine may be performed using the maximum correction amount. When the correction amount average is between the preset minimum and maximum correction amounts, the correction of the second machine may be performed using the correction amount average. The minimum and maximum correction amounts may be appropriately set in advance, and may be changed as needed.

In the correction step (S6), when it is determined to perform the correction (i.e., a correction is required), the correction is performed by moving the second machine (e.g., the unwinder machine) in the width direction.

For a specific example, referring to Figure 10, when checking the twisted level (meandering) relative to the management value in the first sampling section, in the case where the correction amount average is 4.53 mm and the path line management value (minimum correction amount) is, for example, ±1 mm, the correction is required by at least 3.53 mm. Next, a final correction amount is determined after it is compared to the maximum correction amount per cycle, where when the maximum correction amount per cycle is, for example, 2 mm, the calculated minimum correction amount (3.53 mm) is greater than the maximum correction amount (2 mm), so that the first correction is performed using the maximum correction amount (2 mm).

Because the first correction was performed, the correction amount average is reduced in the second sampling section. When the correction amount average is 2.04 mm in the second sampling section, it is still greater than the maximum correction amount (2 mm), so the second correction is performed again using the maximum correction amount (2 mm).

Because two corrections were performed, the correction amount average is further reduced in the third sampling section. When checking the twisted level (meandering) from the management value in the third sampling section, in the case where the correction amount average is 0.24 mm, it is less than the path line management value (minimum correction amount) (±1 mm), so no additional correction is necessary.

Meanwhile, when determining whether a correction is required, a material replacement time point, acceleration and deceleration sections, and/or a maximum correction range, and the like may be considered. First, as the material replacement time point, only the electrode material replacement may be considered. For example, material replacement time point 1 may be a case of less than or equal to a certain coil diameter (diameter of electrode roll wound in a roll shape) designated in the HMI (Human Machine Interface), and material replacement time point 2 may be a case where a certain tap or more has not passed after the material replacement.

Considering the acceleration and deceleration sections, the correction may not be required when a linear speed is below the linear speed designated in the HMI, the example of which may be an operating section after a machine shutdown, immediately before a machine shutdown, immediately after machine acceleration, and the like.

Considering the maximum correction range, in a case of more than the range designated in the HMI, it is possible to provide an alarm and pop-up without correction.

Upon correction, the supply part shuttle is corrected along the Y-axis, where necessary matters (HMI-designated values) to consider upon correction may include the maximum correction amount, correction speed, and the like.

In Table 1, the correction amounts before and after applying the present disclosure are compared, where a smaller correction amount indicates a better match in the IPs between the independent machines. The values in the table represent the EPC actuator PV values.

**[Table 1]**

| | Negative electrode | Positive electrode |
|---|---|---|
| Path line center value correction | -1.2 mm (before correction) → 0 mm (after correction) | 4.2 mm (before correction) → 0 mm (after correction) |
| Path line deviation correction for each unwinder | 2.1 mm (before correction) → 0 mm (after correction) | 0.9 mm (before correction) → 0 mm (after correction) |

Table 2 shows averages of material replacement positional defect numbers and defect reduction ratios before and after applying the present disclosure, where the positive electrode material replacement defects decreased by about 33%, and the negative electrode material replacement defects decreased by about 18%. In this way, the average of positional defects decreased upon the material replacement.

**[Table 2]**

| | Negative electrode | Positive electrode |
|---|---|---|
| Average of positional defect numbers | 15.41 (before correction) → 12.67 (after correction) | 55.27 (before correction) → 37.04 (after correction) |
| Defect reduction ratio | 17.78% (2.74 reduced) | 32.98% (18.23 reduced) |

Table 3 shows numbers of massive defect occurrence and occurrence rates before and after applying the present disclosure, where after replacing the positive electrode material, the importance of massive defect occurrence cases decreased in 150 cells or more. Specifically, before correction, a phenomenon occurred in which defects occurred continuously because the path line did not return to the normal trajectory after replacing the positive electrode material, but after correction, the path line normalized faster, so that massive defect cases were reduced. In this way, the phenomenon of massive defect occurrence upon positive electrode replacement was improved.

**[Table 3]**

| | Before correction | After correction |
|---|---|---|
| Number of massive defect occurrence | Replacement: 6 out of 36 | Replacement: 0 out of 42 |
| Massive defect occurrence rate | 17% | 0% |

### [Explanation of Reference Numerals]

1: traveling electrode, 2: standby Electrode, 10: machine 1 (lamination machine), 11: EPC actuator, 12: sensor, 20, 22: machine 2 (unwinder machine, supply part), 21, 23: spool EPC

## Claims

1. An electrode alignment method, comprising:
correcting a width direction position of an electrode traveling in a first machine of a roll-to-roll process to obtain a correction amount data;
moving a second machine, which is independent by differing from the first machine in at least one of: a function and an install position, based on the obtained correction amount data, in a width direction to align the electrode in the width direction.

2. The electrode alignment method according to claim 1, wherein
the first machine is an electrode lamination machine and the second machine is an electrode unwinder machine; or
the first machine is a first electrode unwinder machine and the second machine is a second electrode unwinder machine with a different install position from the first electrode unwinder machine.

3. The electrode alignment method according to claim 2, wherein
the electrode lamination machine comprises a positive electrode edge position controller provided with an actuator and a negative electrode edge position controller provided with an actuator.

4. The electrode alignment method according to claim 3, wherein
the width direction position of the electrode is corrected by the actuator, and the correction amount data is a correction amount data of the actuator.

5. The electrode alignment method according to claim 2, wherein
the electrode unwinder machine comprises at least one of: a traveling positive electrode unwinder, a standby positive electrode unwinder, a traveling negative electrode unwinder, and a standby negative electrode unwinder; and
the first electrode unwinder machine and the second electrode unwinder machine are each differently at least one of: the traveling positive electrode unwinder, the standby positive electrode unwinder, the traveling negative electrode unwinder, and the standby negative electrode unwinder.

6. The electrode alignment method according to claim 1, wherein
the second machine, including the electrode, moves in entirety.

7. The electrode alignment method according to claim 1, further comprising:
monitoring the correction amount data; and
sampling the correction amount data.

8. The electrode alignment method according to claim 7, further comprising:
filtering the sampled correction amount data; and
calculating a correction amount average from the filtered correction amount data.

9. The electrode alignment method according to claim 8, further comprising:
determining whether a correction is to be performed based on the calculated correction amount average; and
moving the second machine in the width direction to perform the correction based on determining that the correction is to be performed.

10. The electrode alignment method according to claim 9, wherein
the correction of the second machine is performed based on the correction amount average exceeding a preset minimum correction amount.

11. The electrode alignment method according to claim 9, wherein
based on the correction amount average exceeding a preset maximum correction amount, the correction of the second machine is performed to the maximum correction amount.

12. The electrode alignment method according to claim 9, wherein
based on the correction amount average being between preset minimum and maximum correction amounts, the correction of the second machine is performed to the correction amount average.

13. The electrode alignment method according to claim 9, wherein
based on determining that the correction is to be performed, at least one of an electrode replacement time point, and electrode travel acceleration and deceleration sections is considered.

14. An electrode alignment method, comprising:
monitoring a correction amount data obtained by correcting a width direction position of an electrode traveling in a first machine of a roll-to-roll process;
sampling the correction amount data;
filtering the sampled correction amount data;
calculating a correction amount average from the filtered correction amount data;
determining whether a correction is to be performed based on the calculated correction amount average; and
moving a second machine, which is independent by differing from the first machine in at least one of a function and an install position, in a width direction to perform the correction, based on determining that the correction is to be performed.

15. An electrode alignment system, comprising:
a first machine for correcting a width direction position of an electrode traveling in a roll-to-roll process;
a second machine that is independent by differing from the first machine in at least one of a function and an install position, and is movable in a width direction; and
a control part for controlling the electrode to be aligned in the width direction by moving the second machine in the width direction based on a correction amount data of the first machine.
